# EUROPEAN PATENT SPECIFICATION

(11) **EP 1 069 032 B1**
(45) Date of publication and mention of the grant of the patent: **29.11.2006**
(21) Application number: 00114125.8
(22) Date of filing: 11.07.2000
(51) Int. Cl.: B62D 55/21

(54) **Chain for forming tracks**
Kettenlänge für Gleiskette
Portion de chaîne pour chenille de véhicule

(30) Priority: 14.07.1999 IT BO990395
(43) Date of publication of application: 17.01.2001
(73) Proprietor: ITALTRACTOR I.T.M. S.p.A., 41014 Castelvetro, MO (IT)
(72) Inventor: Barani, Stefano, 41050 Spilamberto (Modena) (IT)
(74) Representative: Modiano, Micaela Nadia

(56) References cited:
- WO-A-98/25809
- DE-C- 19 752 391

## Description

The present invention relates to a chain for forming tracks, particularly for earth-moving vehicles.

It is known that tracks for earth-moving vehicles comprise an articulated chain to which plates or shoes for grip are fixed.

An articulated chain for forming tracks as defined in the pre-characterizing part of claim 1 is known from WO-A- 98 25 809.

Due to the extreme environmental conditions in which tracks have to operate, the moving parts and particularly the pivots and the bushings forming the articulations of the chain, are subjected to intense wear.

Considerable progress has been made in limiting the wear between the bushings and the pivots by introducing sealed-lubrication chains. However, this progress has not allowed to appreciably reduce external wear of the bushings caused by their friction between the teeth of the sprocket wheels around which the chain is wound. This wear is particularly increased by the fact that the bushings and sprocket wheels tend to soil with sand or other abrasive dirt and by the intense pressures with which the bushings are pushed into the tooth spaces by the traction force applied to the chain by the driving wheels.

The aim of the present invention is to provide a chain whose articulation of the links is designed so as to reduce friction forces and therefore reduce the external abrasion of the bushings and of the sprocket wheels meshing with the links.

This aim is achieved with a chain for forming tracks, according to claim 1.

Further characteristics and advantages of the present invention will become better apparent from the following description of a preferred embodiment, illustrated only by way of non-limitative example in the accompanying drawings, wherein:

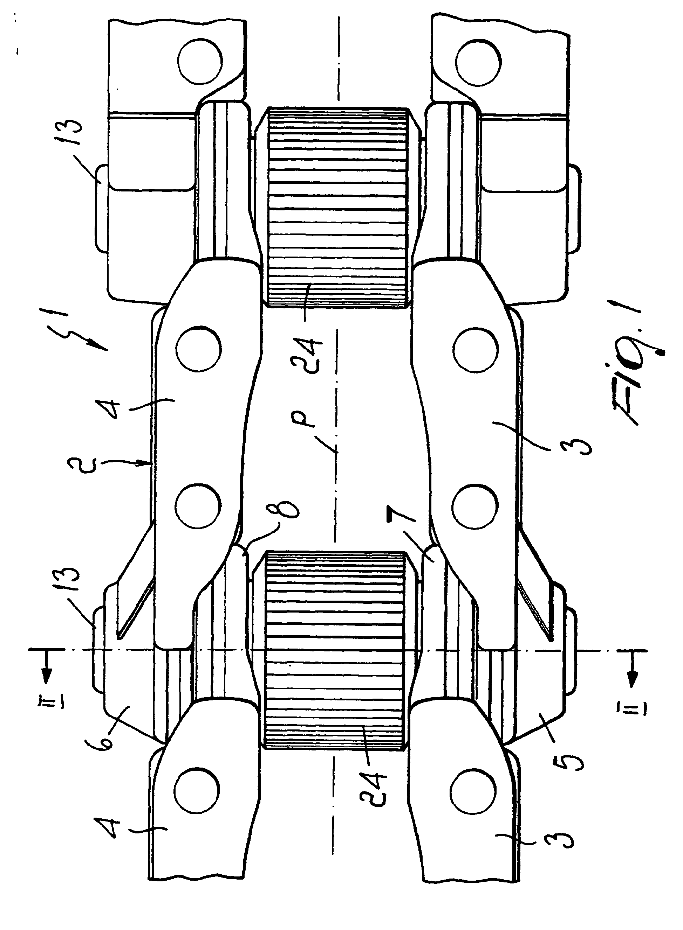

Figure 1 is a plan view of a link of chain for the track of a tracked vehicle, according to the present invention;

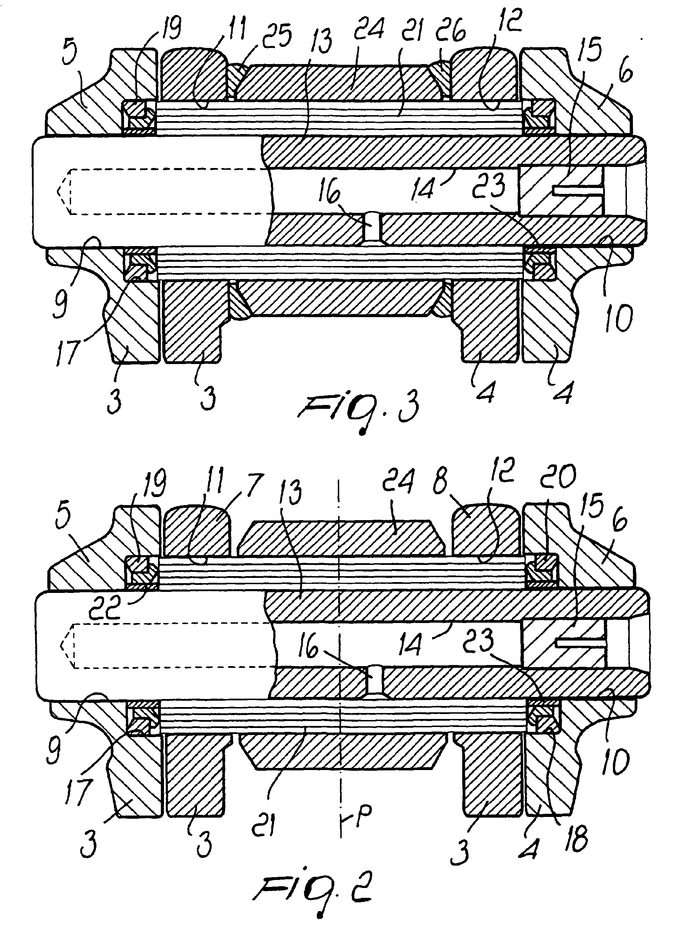

Figure 2 is a sectional view, taken along the line II-II of Figure 1;
Figure 3 is a sectional view of another embodiment of the link according to the present invention.

With reference to the above figures, 1 generally designates a chain according to the invention. The chain is composed of a plurality of links 2 articulated about axes perpendicular to the longitudinal central plane P of the chain.

Each link 2 is composed of a pair of plates 3 and 4 which are mirror-symmetrical with respect to the plane P.

Ends 5,6 respectively of plates 3 and 4 are spaced with respect to the plane P and ends 7 and 8 respectively of plates 3,4 are closer than the spaced ends 5 and 6.

The ends 5-8 are constituted by collars: the ones that form the spaced ends 5 and 6 are thicker than the ones that form the closer ends 7 and 8. Hereinafter, for the sake of convenience in description, the collars are designated by the same reference numerals as the ends 5-8. The collars 5 and 6, which correspond to the spaced ends, are termed outer collars and form respective circular seats 9 and 10, while the collars 7 and 8, which correspond to the closer ends, are termed inner collars and form circular seats 11 and 12.

The opposite ends of a pivot 13 are inserted in the seats 9 and 10, and the pivot is crossed axially by a dead hole 14 which is closed on one side by means of a plug 15 and is connected to the outside by means of a radial hole 16 which lies proximate to the central plane P.

The dead hole 14 constitutes a vessel for containing a lubricant (oil or grease) which can flow out through the radial hole 16 in order to lubricate the parts that are in sliding contact with the pivot 13, as explained hereinafter. The pivot 13 is retained in the seats 9 and 10 by interference forcing or by providing, at the seats 9 and 10, annular slots on the pivot 13 which are engaged by protrusions of the collars formed by deformation.

The seats 9 and 10 have, on the faces adjacent to the inner collars 7 and 8, respective annular wider portions which form slots 17 and 18 together with the pivot 13. The slots 17 and 18 accommodate sealing rings 19 and 20 which are in front contact on the opposite ends of a sleeve 21 superimposed on the pivot 13.

The sleeve 21 is centered between the collars 5 and 6 by means of spacers 22 and 23 inserted in the slots 17 and 18. The length and outside diameter of the sleeve 21 are such that its opposite ends substantially close the slots 17 and 18 without making contact with the outer collars 5 and 6.

The inner collars 7 and 8 of the plates 3 and 4 that belong to the adjacent link are superimposed on the sleeve 21, adjacent to the outer collars 5 and 6 and inside them. The inner collars 7 and 8 also are locked by interference fit on the sleeve 21, so that said sleeve can turn only about the pivot 13.

The described articulation is completed by a bushing 24 which is rotatably supported on the sleeve 20 and is axially retained between the inner collars 7 and 8.

The bushing 24 has chamfered opposite ends and an outside diameter which is complementary to the diameter of the tooth spaces of the sprocket wheels around which the chain is wound.

The operation of the described articulation is evident from the above description. In particular, it should be noted that since the bushing 24 can rotate on the sleeve 21, it can remain stationary with respect to the sprocket wheels, allowing to reduce sliding friction and therefore reduce wear on said sprocket wheels.

It is particularly important that the vessel 14, by being hydraulically closed by the sleeve 21 and by the sealing rings 19 and 20, allows to differentiate the type of lubrication of the sleeve 21 from the type of lubrication of the bushing 24. The vessel 14 can in fact contain a more fluid lubricant, for example oil, to lubricate the region between the sleeve 21 and the pivot 13, while grease can be used to lubricate the region between the bushing 24 and the sleeve 21.

The same inventive concept can of course also be applied to chains of the non-lubricated type, i.e., chains which do not have the hole 14 and the sealing rings 19 and 20.

The described invention is susceptible of numerous modifications and variations, all of which are within the scope of the appended claims.

Figure 3 shows an embodiment in which sealing rings 25 and 26 are interposed between the chamfered ends of the bushing 24 and the inner collars 7 and 8. The rings 25 and 26, in addition to preventing the escape of the lubricant from the sliding region between the bushing and the sleeve, prevent the penetration of dust or other dirt in said region, reducing wear.

Another advantage of the invention is also the possibility to provide a chain which can meet the quality requirements entailed by use in tracked vehicles, also by virtue of the reduced number of parts, which is smaller than that of chains according to other conventional embodiments.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A chain for forming tracks, composed of a plurality of links articulated about axes perpendicular to a longitudinal extension of the chain, each link being composed of two plates (3, 4) having two spaced ends and two closer ends, said ends forming collars (5, 6) supported on articulation pivots (13) so that the closer ends of one link form collars (7, 8) which lie internally with respect to the spaced ends of an adjacent link that are supported on the same pivot, the chain further comprising a sleeve (21) supported on said pivot and arranged between said spaced ends, and a bushing (24) which is supported on said sleeve (21) between said closer ends **characterized in that**:
said inner collars (7, 8) are fitted on said sleeve (21); and
said bushing (24) has chamfered ends opposite said inner collars (7, 8).

2. The chain according to claim 1, **characterized in that** sealing rings (25, 26) are interposed between said inner collars (7, 8) and opposite the chamfered ends of said bushing (24).

3. The chain according to claim 1, **characterized in that** said pivot (13) is crossed by an axial hole (14) which is connected to a region where said sleeve (21) slides on said pivot (13), said hole (14) constituting a vessel for containing a lubricant.

4. The chain according to claim 1, **characterized in that** said spaced and closer ends form respective outer collars (5, 6) and inner collars (7, 8), the outer collars (5, 6), which form said spaced ends, being thicker than the inner collars, which form said closer ends, and having engagement seats (9, 10) for opposite ends of said pivot (13), respective slots (17, 18) being provided on internal faces of said outer collars (5, 6) and around said pivot (13), said slots accommodating rings (19, 20) in front hermetic contact on the opposite ends of said sleeve (21), said sleeve (21) being arranged between said outer collars (5, 6) by means of spacers (22, 23) inserted in said slots (17, 18).

## Patentansprüche

1. Kette zum Bilden einer Gleiskette mit einer Vielzahl Gliedern, deren Gelenkachsen rechtwinklig zur Längsrichtung der Kette verlaufen, bei der jedes Glied aus zwei Platten (3, 4) mit zwei Enden mit größerem Abstand und zwei Enden mit kleinerem Abstand besteht, wobei die Enden Kragen (5, 6) bilden, die auf Schwenkzapfen (13) gelagert sind, so dass die Enden mit kleinerem Abstand eines Gliedes Kragen (7, 8) bilden, die gegenüber den Enden mit größerem Abstand des nächsten Gliedes, die auf demselben Zapfen gelagert sind innen liegen, bei der die Kette darüber hinaus eine auf dem Zapfen angeordnete Hülse (21) aufweist, die zwischen den Enden mit größerem Abstand angeordnet ist, und eine Buchse (24), die auf der Hülse (21) zwischen den Enden mit kleinerem Abstand gelagert ist, **dadurch gekennzeichnet,**
**dass** die inneren Kragen (7, 8) auf der Hülse (21) angebracht sind und
**dass** die Buchse (24) abgeschrägte Enden gegenüber den inneren Kragen (7, 8) aufweist.

2. Kette nach Anspruch 1, **dadurch gekennzeichnet, dass** zwischen den inneren Kragen (7, 8) und gegenüber den abgeschrägten Enden der Buchse (24) Dichtungsringe (25, 26) angeordnet sind.

3. Kette nach Anspruch 1, **dadurch gekennzeichnet, dass** der Zapfen (13) eine axiale Bohrung (14) aufweist, die mit einem Bereich verbunden ist, in dem die Hülse (21) auf dem Zapfen (13) gleitet, und dass die Bohrung (14) ein Reservoir für Schmiermittel bildet.

4. Kette nach Anspruch 1, **dadurch gekennzeichnet, dass** die Enden mit größerem Abstand und die Enden mit kleinerem Abstand entsprechende äußere Kragen (5, 6) und innere Kragen (7, 8) bilden, dass die die Enden mit größerem Abstand bildenden äußeren Kragen (5, 6) dicker als die die Enden mit kleinerem Abstand bildenden inneren Kragen sind und Presssitze (9, 10) für entgegengesetzte Enden des Zapfens (13) aufweisen, dass entsprechende Aussparungen (17, 18) auf inneren Flächen der äußeren Kragen (5, 6) und um die Zapfen (13) herum vorgesehen sind, dass die Aussparungen Ringe (19, 20) enthalten, die in hermetischem Kontakt mit den Stirnflächen der gegenüberliegenden Enden der Hülse (21) stehen, und dass die Hülse (21) zwischen den äußeren Kragen (5, 6) mittels Abstandstücken (22, 23) angeordnet ist, die in die Aussparungen (17, 18) eingesetzt sind.

## Revendications

1. Chaîne pour former des chenilles, composée d'une pluralité de maillons articulés autour d'axes perpendiculaires à une extension longitudinale de la chaîne, chaque maillon étant composé de deux plaques (3, 4) présentant deux extrémités espacées et deux extrémités rapprochées, lesdites extrémités formant des colliers (5, 6) supportés sur des pivots d'articulation (13) de sorte que les extrémités rapprochées d'un maillon forment des colliers (7, 8) qui se trouvent à l'intérieur par rapport aux extrémités espacées d'un maillon adjacent qui sont supportées sur le même pivot, la chaîne comprenant en outre un manchon (21) supporté sur ledit pivot et agencé entre lesdites extrémités espacées, et un manchonnage (24) qui est supporté sur ledit manchon (21) entre lesdites extrémités rapprochées **caractérisée en ce que**:
lesdits colliers internes (7, 8) sont montés sur ledit manchon (21); et
ledit manchonnage (24) présente des extrémités biseautées opposées auxdits colliers internes (7, 8).

2. Chaîne selon la revendication 1, **caractérisée en ce que** des bagues d'étanchéité (25, 26) sont interposées entre lesdits colliers internes (7, 8) et opposées aux extrémités biseautées dudit manchonnage (24).

3. Chaîne selon la revendication 1, **caractérisée en ce que** ledit pivot (13) est traversé par un trou axial (14) qui est relié à une région dans laquelle ledit manchon (21) coulisse sur ledit pivot (13), ledit trou (14) constituant un récipient pour contenir un lubrifiant.

4. Chaîne selon la revendication 1, **caractérisé en ce que** lesdites extrémités espacées et rapprochées forment des colliers externes (5, 6) et des colliers internes (7, 8) respectifs, les colliers externes (5, 6), qui forment lesdites extrémités espacées, étant plus épais que les colliers internes, qui forment lesdites extrémités rapprochées, et présentant des sièges d'engagement (9, 10) pour des extrémités opposées dudit pivot (13), des fentes respectives (17, 18) étant prévues sur des cotés internes desdits colliers externes (5, 6) et autour dudit pivot (13), lesdites fentes recevant des bagues (19, 20) en contact hermétique frontal sur les extrémités opposées dudit manchon (21), ledit manchon (21) étant agencé entre lesdits colliers externes (5, 6) au moyen d'éléments d'espacement (22, 23) insérés dans lesdites fentes (17, 18).
